(19) Europäisches Patentamt
European Patent Office
Office européen des brevets

(11) Publication number: **0 055 531 A1**

(12) **EUROPEAN PATENT APPLICATION**

(21) Application number: 81305753.6

(22) Date of filing: 04.12.81

(51) Int. Cl.$^3$: C 08 G 75/12
C 08 G 18/52, C 08 G 59/66

(30) Priority: 04.12.80 US 213173
04.02.81 US 231319
30.03.81 US 248994

(43) Date of publication of application:
07.07.82 Bulletin 82/27

(84) Designated Contracting States:
AT BE CH DE FR GB IT LI LU NL SE

(71) Applicant: Products Research and Chemical Corporation
2820 Empire Avenue
Burbank California 91504(US)

(72) Inventor: Singh, Hakam
9628 E. Camino Real
Arcadia California 91006(US)

(72) Inventor: Williams, Morris
5307 North Sepulveda Boulevard 210
Van Nuys California 91411(US)

(72) Inventor: Hutt, Jack W.
4559 Jubilo Drive
Tarzana California 91356(US)

(74) Representative: Coxon, Philip et al,
Eric Potter & Clarkson 14 Oxford Street
Nottingham NG1 5BP(GB)

(54) **Linear liquid polythioethers.**

(57) A non-crystallizing water, solvent, fuel and temperature resistant linear, liquid polythioether containing no carbonyl groups and having the formula

$$B\left[O-\underset{R_1}{CH}-\underset{R_2}{CH}-S(XS)_p-\underset{R_3}{CH}-\underset{R_4}{CH}\right]_n O-B$$

wherein each of $R_1$, $R_2$, $R_3$ and $R_4$ is hydrogen or lower alkyl with the provision that a sufficient number of $R_1$, $R_2$, $R_3$ and/or $R_4$ are lower alkyl in said polymeric backbone to render said backbone non-crystallizing; X is a divalent organic radical selected from $-CH_2-CH_2-$, $-CH_2-CH_2-CH_2-CH_2-$, $CH_2-CH_2-S-CH_2-CH_2-$, or $CH_2-CH_2-O-CH_2-CH_2-$: n is 15 to 200, p is 0 or 1 and B is a terminating radical which does not substantially reduce the water, solvent and fuel resistance, said terminating radical being either a chemically non-reactive radical or a vulcanizable radical curable to an elastomeric sealant.

EP 0 055 531 A1

Croydon Printing Company Ltd.

# LINEAR LIQUID POLYTHIOETHERS

## Background of the Invention:

There are not many liquid polymers available in the marketplace today which have good fuel, solvent, water and temperature resistance. Of those liquid polymers available in the marketplace, most are relatively expensive and the remainder have other disadvantages.

Certain prior art workers have made hydroxyl terminated polythioethers by condensing thiodiglycol in the presence of certain catalysts as, for example, shown in U.S. Patent 3,312,743 and 3,335,189. Compounds produced by these patents give semi-crystalline waxy solids, gums or low molecular weight liquids which have limited commercial utility.

Other prior art workers, as shown in the Ballard et al. U.S. Patent 2,484,369, also disclose condensing thiodiglycol to produce polythioethers which are stated to be useful as low temperature lubricants. The condensation takes place in the presence of strong dehydration catalysts such as para-toluene sulfonic acid. Such catalysts are so strong that, during condensation, intramolecular dehydration occurs which produces random double bonds and carbonyl groups in the resulting products, such products being low molecular weight liquids or waxy solids not useful as plasticizers and not curable to elastomeric sealants.

Copolymerization of thiodiglycol with dihydric alcohols is disclosed in U.S. Patents 3,005,803; 3,985,708 and 4,093,599. Due to the fact that the hydroxyl groups on

the dihydric alcohols have lower activity towards condensation than the hydroxyl groups on thiodiglycol, the condensation is irregular and/or incomplete, causing the reaction product to have a very wide molecular weight distribution, which is undesirable. Just as importantly, the dihydric alcohols are non-sulfur containing and therefore incorporation of these non-sulfur containing monomers in the polymer backbone significantly reduces the solvent and fuel resistance of the resulting polymer.

In addition to the foregoing deficiencies with the previously known polythioethers, the prior art polythioethers are also crystallizing products which, even if liquid or semi-liquid at ambient temperatures, when they are cooled sufficiently to solidify will not return to their previous liquid state even when the temperature is raised to ambient.

Summary of the Invention:

It is therefore the primary object of the present invention to disclose and provide relatively high molecular weight linear, liquid non-crystallizing polythioethers having no carbonyl groups which are water, solvent, fuel and temperature resistant and have certain terminating radicals which make them useful as plasticizers or vulcanizable to elastomeric sealants which exhibit elastomeric properties over a wide range of temperatures.

It is still another object of the present invention to disclose vulcanized solid elastomeric sealants which are water, solvent, fuel and temperature resistant.

These and other objects of the present invention, which will be apparent to the art-skilled, are accomplished by providing a non-crystallizing, water, solvent, fuel and temperature resistant linear backbone containing no carbonyl groups and having repeating units or groups of the

formula

$$\left[ O-\underset{R_1}{CH}-\underset{R_2}{CH}-S-(XS)_p-\underset{R_3}{CH}-\underset{R_4}{CH} \right]_n$$

wherein X is a radical consisting of $-CH_2-CH_2-CH_2-CH_2-$,

$-CH_2-CH_2-$, $-CH_2-CH_2-S-CH_2-CH_2-$, or $-CH_2-CH_2-O-CH_2-CH_2-$;

n is from about 15, preferably 20, to 200; p is 0 or 1; and each of $R_1$, $R_2$, $R_3$ and $R_4$ is hydrogen or lower alkyl (preferably methyl) with the provision that the total number of $R_1$, $R_2$, $R_3$ and/or $R_4$ which are lower alkyl in said polymeric backbone is sufficient to render said backbone non-crystallizing. In general it may be said that the total number of $R_1$, $R_2$, $R_3$ and/or $R_4$ which are lower alkyl in said polymeric backbone is at least the nearest whole number to the quotient of n/5, preferably n/4. In other words, in the case of n/4, when n is 16 at least four of $R_1$, $R_2$, $R_3$ or $R_4$ would be lower alkyl in the polymeric backbone. On the other hand when n is, for example, 200 at least about 50 of $R_1$, $R_2$, $R_3$ and/or $R_4$ would be lower alkyl in the polymeric backbone which could be accomplished (1) by having $R_1$ and $R_4$ both lower alkyl in at least about 12% to 13% of the units or groups or (2) by having $R_1$ lower alkyl in at least about 25% of the units or groups. In all of the foregoing exemplary cases the resulting polymeric backbone is non-crystallizing.

The polymeric backbone is terminated with two terminating radicals which do not substantially reduce the water, solvent, fuel and temperature resistance of the liquid polythioether polymer. Such terminating radicals are either vulcanizable radicals which, when vulcanized, produce elastomeric sealants, for example room or low temperature vulcanizable radicals, or chemically non-reactive radicals. In the case of non-crystallizing liquid polythioethers

having terminating vulcanizable radicals such liquid polythioethers are curable or vulcanizable to solid polythioether elastomer sealants which are water, solvent, fuel and temperature resistant and exhibit elastomeric properties over a wide range of temperature . In the case of those non-crystallizing liquid polythioethers having terminating chemically non-reactive radicals, such liquid polythioethers are useful as plasticizers and non-curing sealants.

Whatever the use of the non-crystallizing linear, liquid polythioethers of this invention, they will in general have a molecular weight of at least about 1500, preferably 2000, to as high as about 25,000, the particular molecular weight desired being a matter of choice.

It should be noted that by "non-crystallizing" we mean a polymer which is liquid at ambient temperature and is not a semi-crystalline wax, gum or solid. Moreover, the non-crystallizing polymer, even when cooled to a sufficiently low temperature to become a solid, will be an amorphous solid which, when the temperature is raised to ambient, will return to the liquid state.

Description of the Preferred Embodiments:

In general the liquid polythioethers of the present invention will be made by condensing one or more beta-thioether diols. By "beta-thioether diol" we mean a thioether diol wherein each hydroxyl group in the diol is located beta to a sulfur atom, i.e. each hydroxyl group will be separated from a sulfur atom by two carbon atoms. A certain percentage, ranging up to 100 mole %, of the starting beta-thioether diols will have at least one (preferably one or two) branched lower alkyl, i.e. there will be a lower alkyl group (preferably a methyl group) attached to at least one of the two carbon atoms

separating the sulfur, preferably the beta carbon atom, and hydroxyl groups so that at least one of said hydroxyl groups will have a lower alkyl group located alpha or beta to said hydroxyl group. Hereinafter such beta-thioether diols will be referred to as "substituted beta-thioether diols".

The substituted beta-thioether diol may be the only beta-thioether diol used in the condensation reaction which produces the liquid polythioether backbone but there may also be used an "unsubstituted beta-thioether diol" by which we mean a beta-thioether diol wherein the two carbon atoms separating the sulfur and hydroxyl groups are unsubstituted, i.e. have the structure of $HO-CH_2-CH_2-S-$. The preferred unsubstituted beta-thioether diol is thiodiglycol, bis (beta-hydroxyethyl) sulfide.

As noted the amount of substituted beta-thioether diol in the condensation reaction may be 100% or less. However, the least amount of substituted beta thioether diol which may be used must be sufficient to render the resulting liquid polythioether non-crystallizing. In general, the number of branched alkyls present in the liquid polythioether will be the quotient of n/5 or, preferably, n/4 where n has the same meaning as before. Therefore, where there is only one branched alkyl per substituted beta-thioether diol there should be present at least 20 or 25 mole % substituted beta-thioether diol in the condensation reaction and where there are two branched alkyls per substituted beta-thioether diol there should be present at least about 10 to 13 mole % of substituted beta-thioether diol in the condensation reaction.

As has been noted before, the liquid polythioethers of the present invention are linear and will contain no carbonyl groups. In order to provide a linear polythioether containing no carbonyl groups the beta-thioether diols referred to above may be condensed in the presence of an etherification catalyst which will not

initiate intramolecular dehydration at the temperature and pressures used in the reaction. In this case a non-crystallizing water, solvent, fuel and temperature resistant linear polymeric backbone is formed containing no carbonyl groups and having two terminating hydroxyl groups or radicals thereon, such terminating hydroxyl groups being one of the terminating vulcanizable groups. The resulting linear liquid polythioether having the two terminating hydroxyl radicals is vulcanizable or curable to a solid elastomer sealant at either low or high temperatures.

As will be explained in greater detail, if other such terminating vulcanizable radicals, are desired they may be added by including a condensable organic compound having a terminating radical in the initial condensation reaction with the beta-thioether diol. Alternatively, other terminating vulcanizable radicals and chemically non-reactive radicals may be added after formation of the hydroxyl terminated linear liquid polythioether by reacting such linear polythioether with an organic compound having the required terminating radicals as well as radicals reactive with hydroxyl groups.

Linear liquid polythioethers containing no carbonyl groups or olefinic double bonds and having terminating chemically non-reactive radicals may be formed in situ by including in the condensation reaction an organic compound which is chemically non-reactive except for a condensable radical (e.g. a hydroxyl radical located beta to a sulfur atom) which will react with the hydroxyl groups in the beta-thioether diols during the condensation reaction thereby forming a liquid polythioether which is terminated with the chemically non-reactive radical of said organic compound, which will hereinafter be referred to as a "condensable, non-reactive organic compound". Alternatively, the terminal chemically

non-reactive radicals may be introduced after formation of the hydroxyl terminated liquid polythioether by reaction with an organic compound which has a radical reactive with said terminal hydroxyl groups (hereinafter referred to as hydroxyl reactive organic compound). This hydroxyl reactive organic compound may have, as the only reactive group, a group which is reactive with hydroxyl, the remainder of the compound being chemically non-reactive, in which event there is formed a liquid polythioether terminated with chemically non-reactive radicals. On the other hand, the hydroxyl reactive organic compound may be difunctional, i.e. contain a reactive functional group in addition to the hydroxyl reactive group, in which case there is formed a liquid polythioether terminated with reactive functional groups, to which may be added an organic compound which has, as the only reactive group, a group which will react with said reactive functional groups, the remainder of the compound being chemically non-reactive thereby forming a non-crystallizing, non-reactive radical as shown in Example 9..

In any event, the non-crystallizing water, solvent, fuel and temperature resistant linear liquid polythioethers of the present invention will have 2 terminating radicals which do not substantially reduce the water, solvent, fuel and temperature resistance of the liquid polythioether.

The terminating radicals will include, inter alia, chemically non-reactive radicals as well as vulcanizable radicals such as low temperature vulcanizable radicals. It should be noted that by "low temperature" we mean a radical which is vulcanizable at a temperature of less than about 150°F. and preferably less than about 100°F..

In any event, the condensation of the beta-thioether diol and, if desired, the aforesaid organic compound having a condensable group, is accomplished by

mixing the reactants with a suitable etherifying catalyst and heating until water is split off which is then removed by, for example, simple distillation or, if a faster reaction is desired, by applying a vacuum, the vacuum not being sufficient to remove the reactants. When the reaction proceeds to a certain point the rate at which the water is formed is substantially reduced and, at this point, a vacuum of 100 millimeters of mercury or less (preferably 15 millimeters or less, e.g. 10 millimeters of mercury) must be applied to produce the instant polythioethers of the present invention. This high vacuum of 100 millimeters or less is applied when the average molecular weight reaches about 1,000 at which point the reactants will not be removed because of the increase in molecular weight. This high vacuum is necessary in order to produce higher molecular weight products and to prevent side reactions causing the introduction of random olefinic double bonds and carbonyl groups in the polythioethers.

The temperature at which the condensation reaction takes place may vary widely but in general is between 125° or 150°C. and 200°C. but below the boiling point of the reaction mixture. The etherification catalysts used in the present invention are esters or hemi-esters of phosphorous acid. Such catalysts will not initiate intramolecular dehydration during the condensation reaction.

The preferred catalyst of the present invention is triphenyl phosphite. We have found that this catalyst produces excellent results, giving liquid polymers with narrower molecular weight distributions, less by-products, and no formation of carbonyl groups or olefinic double bonds.

The beta-thioether diols are, in general, known in the art and will have the following formula:

$$HO-\underset{R_1}{\underset{|}{CH}}-\underset{R_2}{\underset{|}{CH}}-S-(XS)_p-\underset{R_3}{\underset{|}{CH}}-\underset{R_4}{\underset{|}{CH}}-OH$$

wherein $R_1$, $R_2$, $R_3$, $R_4$, X and p have the same meaning as indicated hereinbefore. In the case of the unsubstituted beta-thioether diols each of $R_1$, $R_2$, $R_3$ and $R_4$ is hydrogen and in the case of the substituted beta-thioether diols at least one of $R_1$, $R_2$, $R_3$ and $R_4$ is lower alkyl and preferably methyl and more preferably one or both of $R_1$ or $R_4$ are lower alkyl (preferably methyl) and $R_2$ and $R_3$ are hydrogen.

The unsubstituted beta-thioether diols are known in the art and therefore no detailed exemplification thereof is necessary. An exemplary unsubstituted beta-thioether diol is thiodiglycol.

The substituted beta-thioether diols are not as well known in the art but either the substituted or unsubstituted beta-thioether diols may be prepared by reacting mercapto-alcohols or dimercaptans with ethylene oxide or lower alkyl substituted epoxides according to the following reactions:

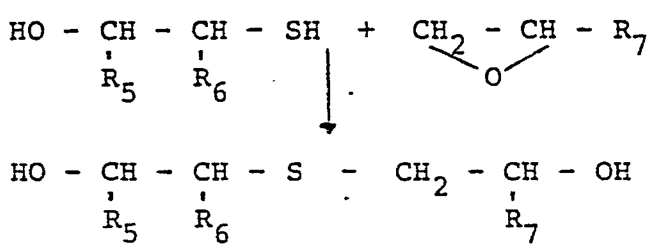

or

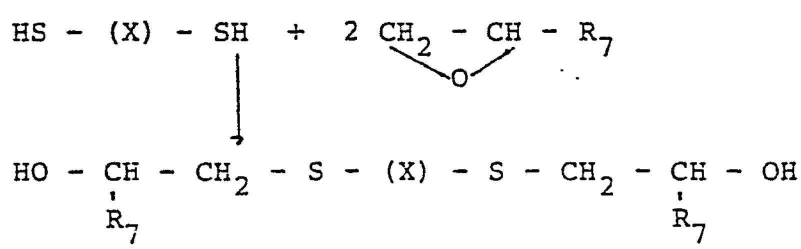

wherein each of $R_5$, $R_6$ and $R_7$ is hydrogen or lower alkyl, and X has the same meaning indicated hereinbefore. It should be noted that when $R_5$, $R_6$ and $R_7$ is hydrogen, unsubstituted beta-thioether diols are formed and when

$R_5$, $R_6$ or $R_7$ is lower alkyl, substituted beta-thioether diols are formed. Exemplary substituted beta-thioether diols are

$HO\ CH(CH_3)\ CH_2\ S\ CH_2\ CH(CH_3)OH$;

$HO\ CH_2\ CH_2\ S\ CH_2\ CH(CH_3)OH$;

$HO\ CH(CH_3)\ CH_2S\ CH_2\ CH_2O\ CH_2CH_2S\ CH_2\ CH(CH_3)\ OH$;

$HO\ CH(CH_3)\ CH_2\ S\ CH_2CH_2\ S\ CH_2CH(CH_3)\ OH$;

$HO\ CH(CH_3)\ CH_2S\ CH_2CH_2CH_2CH_2S\ CH_2CH(CH_3)\ OH$; and

$HO\ CH(CH_3)\ CH_2S\ CH_2CH_2SCH_2CH_2S\ CH_2CH(CH_3)\ OH$

The preferred linear polythioether of the present invention having two terminating radicals has the formula

$$B\!-\!\!\left[O-\underset{R_1}{CH}-\underset{R_2}{CH}-S-(XS)_p-\underset{R_3}{CH}-\underset{R_4}{CH}\right]_n\!O-B$$

where $R_1$, $R_2$, $R_3$, $R_4$, X, n and p have the same meaning as indicated before and B is a terminating vulcanizable radical or a chemically non-reactive radical having no carbonyl groups and, preferably, containing no more than 20 carbon atoms.

The terminating radical on the linear, liquid polythioethers must not substantially reduce the very desirable properties of the backbone of this invention, said properties including water, solvent, fuel and temperature resistance. If a water, solvent, fuel and temperature resistant solid elastomer sealant is desired, the terminating radicals will be terminating vulcanizable

radicals and if room or low temperature vulcanizable elastomer sealants are desired such vulcanizable radicals will be low temperature vulcanizable radicals. Such vulcanizable radicals, including those curable at low temperatures, will include epoxide, reactive silyls, isocyanate, reactive olefinic double bond, mercaptan or hydrogen of a hydroxyl.

As has already been noted, the polythioethers of the present invention terminated with 2 hydroxyl groups are made by condensing the beta-thioether diol. Linear, liquid polythioethers which have reactive olefinic double bonds may be made by adding to the condensation reaction a compound having the formula: $HO-CH_2-CH_2-S-R'-CH=CH_2$ wherein R' is alkylene of 4 to 6 carbon atoms. In this regard, it is pointed out that if the terminating radical is added by condensation, the hydroxyl groups should all be located beta to a sulfur atom.

Linear, liquid polythioethers having terminating mercaptan radicals may be produced by reacting the polythioethers terminated with olefinic double bonds with an excess of an organic compound having two terminal mercaptan groups in the presence of an appropriate catalyst, e.g. a free radical initiating catalyst such as a peroxide and an amine having a $pK_b$ of 6 or less as disclosed in U.S. Patent 3,923,748 issued December 2, 1975.

As indicated in the 3,923,748 patent, the dimercaptan compounds may have the formula $R''(SH)_2$ wherein R" is a divalent organic radical such as alkyl, aryl ether, alkyl ether, and the thioether thereof. Exemplary of such dimercaptan compounds, though not limited thereto are beta, beta'-dimercapto diethyl ether, beta, beta'-dimercapto diethyl sulfide, 1,6-dimercapto hexane and p,p'-dimercapto-methyl, diphenyl oxide.

The linear liquid polythioethers having terminating epoxide radicals may be made by reacting the hydroxyl or mercaptan terminated polythioethers with an excess of a diepoxide compound such as bisphenol A diglycidyl ether in the presence of an appropriate catalyst.

Similarly, linear, liquid polythioethers having terminating isocyanate radicals may be produced by reacting the hydroxyl terminated polythioethers with an excess of an organic diisocyanate such as toluene diisocyanate.

The terminating reactive silyl radicals include hydrolyzable silyls such as lower alkoxy silane (e.g. tri(lower)alkoxy silane), acyloxy silane, silane oximes and silane hydrides. For example, a reactive silyl termination may be made by reacting a mercapto silane with the olefin terminated liquid polythioether.

The foregoing linear, liquid polythioethers having terminating olefin radicals can be vulcanized to elastomeric sealants by mixing therewith a stoichiometric amount of di- or trimercaptan and an appropriate catalyst or by free radical mechanism.

The linear, liquid polythioethers of the present invention having terminating mercaptan vulcanizable radicals may be vulcanized to elastomeric sealants by using an oxidizing agent such as a dichromate, an organic peroxide, an inorganic peroxide, a diepoxide, etc..

The linear, liquid polythioethers having terminating epoxide vulcanizable radicals may be vulcanized by using a di- or triamine or a di- or trimercaptan.

The vulcanized products made from such linear, liquid polythioethers will be solid polythioether elastomer sealants, the vulcanization, in general taking place after application of the liquid polythioether to the desired place, such application being by pouring, brushing, spraying, etc..

The linear, liquid polythioether may also be mixed with, prior to vulcanization, various additives such

as plasticizers, fillers, colorants, and other monomeric or polymeric compounds in order to give the vulcanized polythioether certain desired properties known in the art.

Additionally, cure times and rates may be altered by adding other catalysts, reactants, etc. during vulcanization. For example, the addition of redox catalysts, such as an iron salt has been found to be of value in vulcanizing the mercaptan terminated polythioethers.

In addition to the terminating vulcanizable radicals, the non-crystallizing linear, liquid polythioethers may also contain terminating chemically non-reactive radicals.

It should be noted that by "chemically non-reactive" we mean a radical which is chemically inert or inactive with water and other substances, such as oxygen, generally found in the ambient. We have found, for example, that chemically non-reactive radicals which have a reactivity the same as, or less than the hydrogens on a benzene ring are quite satisfactory. Those chemically non-reactive radicals which are suitable for use in the present invention include aromatic, alkyl, heteroalkyl containing one or more heteroatoms (e.g. thioalkyl, oxyalkyl, etc.), alicyclic and heteroalicyclic, the hetero atom being sulfur and/or oxygen. In general, the number of carbon atoms in the chemically non-reactive radical will not exceed about twenty.

The non-crystallizing linear, liquid polythioethers having terminating chemically non-reactive radicals are excellent plasticizers and may be compounded with a number of liquid polymers with which they are compatible or miscible and may be added in the same amounts and for the same purpose as any of the common plasticizers. In this regard, the linear, liquid polythioethers having terminating chemically non-reactive radicals of the

present invention have all the necessary properties e.g. compatibility, low volatility and non-reactivity, of any good plasticizer but, in addition, also are fuel, solvent, temperature and water resistant as well as being non-crystallizing. The linear, liquid polythioether plasticizers are therefore ideally suited for use with liquid elastomers and, particularly, with fuel, temperature and water resistant elastomers which are non-crystallizing, such as the linear, liquid polythioether elastomers of the present invention.

The liquid polythioethers having terminating chemically non-reactive radicals may be incorporated with thermoplastic or thermosetting polymers. The amount of plasticizer used with any given polymer is the same as any other known plasticizer and depends upon the properties desired of the final composition. In general, it may be said that the amount of plasticizer will be between 1 and 50 parts by weight per hundred parts by weight of resin (phr). As noted before, such plasticizers are particularly useful when used in conjunction with liquid elastomers such as nitrile rubbers, polysulfides (e.g. Thiokol), etc.. Particularly preferred elastomers with which the instant plasticizers are used are the linear, liquid polythioethers of the present invention having terminating vulcanizable radicals.

As has been demonstrated hereinbefore, the linear, liquid polythioethers having terminating chemically non-reactive radicals may be made following the teachings herein. For example, liquid non-crystallizing polythioethers having 2 terminating thioalkyl radicals may be produced by including in the condensation reaction, a beta thioether alcohol having the formula:

$$HO-CH_2-CH_2-S-R'''$$

wherein R"' is alkyl of, e.g. from six to eight carbon atoms. Such beta-thioether alcohols may be made by reacting mercaptoethanol with an alpha-olefin such as alpha-hexene, alpha-heptene or alpha-octene in the presence of a free radical catalyst.

The aromatic terminated polythioethers may be produced by reacting the hydroxyl terminated polythioethers with para-toluene sulfonyl isocyanate or phenyl isocyanate. Alternatively such aromatic terminated polythioethers may be formed by reacting the hydroxyl terminated polythioethers with an aromatic diisocyanate such as toluene-2, 4-diisocyanate and then reacting the resulting isocyanate terminated polythioether with a lower alkyl alcohol.

Another alternative route to forming liquid polythioethers having terminating chemically non-reactive radicals is to first form polythioethers having terminating vulcanizable radicals other than hydroxyl groups. For example, polythioethers having terminating reactive olefinic double bonds may be produced as exemplified hereinbefore. Such reactive olefinic double bonds may be converted to chemically non-reactive terminals by reacting the olefin terminated polythioethers with a lower alkyl or aryl mercaptan in the presence of an appropriate catalyst, e.g. a free radical initiating catalyst such as a peroxide and an amine having a $pK_b$ of 6 or less as disclosed in U.S. Patent 3,923,748.

In order to fully illustrate the present invention the following examples are given, wherein all parts and percentages are by weight unless otherwise stated.

Example 1

Synthesis of 2,9-dihydroxy, 4,7-dithiadecane (ethylene bis hydroxy propyl sulfide-glycol from ethane dithiol)

940 Grams (10 moles) of ethane dithiol were taken in a flask fitted with a stirrer, a thermometer, a dropping funnel and a condenser. To this 1160 grams (20 moles) of propylene oxide were added dropwise with vigorous stirring. A slow exotherm developed which was controlled by using a water bath. After the exotherm subsided the liquid was examined in an IR analysis. The reaction was found to have completed.

Example 2

Synthesis of 2,12 dihydroxy, 7-oxa, 4,10 dithia tridecane (glycol from dimercaptodiethyl ether)

700 grams (5.07 moles) of dimercaptodiethyl ether were taken in a three necked glass reactor fitted with a stirrer, a thermometer, a dropping funnel and a condenser. To this 588 grams (10.14 moles) of propylene oxide were added dropwise with vigorous stirring. A mild exotherm slowly developed which was controlled by using a water bath. The reaction was found to be complete as evidenced by the absence of mercaptan or epoxy bands in the IR spectrum.

Example 3

Synthesis of linear hydroxyl terminated polythioether

| | | |
|---|---|---|
| Thiodiglycol | 1400 | grams |
| Hydroxyethyl, 2-hydroxy propyl sulfide | 600 | grams |
| Triphenyl phosphite | 20 | grams |
| Thiodiphenol | 2.5 | grams |

The above ingredients were mixed in a 4 liter glass reactor fitted with a stirrer, a thermometer and a distillation condenser and heated under a stream of

nitrogen at 180°C. until the vapor temperature of condensate dropped from initial 120°C. to less than 70°C. At this time vacuum was applied and the reaction of condensation continued at 180°C. until the rate of condensation was negligible as evidenced by collected distillate. The polymer obtained was a clear brownish liquid with a viscosity of 475 poise and hydroxyl number of 32.

Example 4

<u>Synthesis of linear hydroxyl terminated polythioether (higher viscosity than Example 3)</u>

| | | |
|---|---|---|
| Thiodiglycol | 2420 | grams |
| Hydroxyethyl, 2-hydroxypropyl sulfide | 1037 | grams |
| Triphenyl phosphite (catalyst) | 34.6 | grams |
| Thiodiphenol (anti-oxidant) | 8.6 | grams |

Procedure: The above materials were stirred together under nitrogen in a 4 liter glass reactor equipped with a thermometer and condenser for distillation. The temperature of the mixture was kept at 150°C. for 5 hours after which it was raised to 180°C.. This process was carried out under a stream of nitrogen, and 180°C. was maintained until the vapor temperature of the distillate dropped below 90°C. At this point further reaction was carried out under full vacuum at 180-185°C. until the material showed a hydroxyl number of about 22.. The resulting polymer was a brown, clear liquid with a viscosity of 1743 poise.

Example 5

<u>Synthesis of linear hydroxyl terminated polythioether</u>

| | | |
|---|---|---|
| Thiodiglycol | 1540 | grams |
| Ethylene bis hydroxypropyl sulfide (Example 1) | 460 | grams |
| Triphenyl phosphite | 20 | grams |
| Thiodiphenol | 2.5 | grams |

In a 4 liter glass reactor fitted with stirrer, thermometer and distillation condenser the above ingredients were heated at 180°C. under a stream of nitrogen until the vapor temperature of condensate dropped below 70°C. At this time nitrogen was stopped and full vacuum applied and the remaining reaction carried out until the rate of condensation became negligible. A liquid polymer with a viscosity of 530 poise and hydroxyl number 35 was thus obtained.

Example 6

Synthesis of linear hydroxyl terminated polythioether

| | | |
|---|---|---|
| Thiodiglycol | 1467.5 | grams |
| Bis-hydroxy propyl thioethylene oxide (Example 2) | 555.0 | grams |
| Triphenyl phosphite | 20.0 | grams |
| Thiodiphenol | 2.5 | grams |

In a 4 liter glass reactor fitted with distillation condenser, stirrer and thermometer, the above ingredients were allowed to react under a stream of nitrogen at 180°C. Water, the product of condensation reaction, was collected until the rate of condensation dropped and temperature of vapor at condenser head dropped to less than 70°C.. At this point nitrogen was stopped, full vacuum applied and the condensation reaction continued under these conditions at 180°C. until the rate of condensation dropped to negligible. The polymer obtained thus was a brownish liquid with viscosity 500 poise and hydroxyl number 36.

Example 7

Synthesis of linear aromatic terminated polythioether

| | | |
|---|---|---|
| Hydroxyl terminated polymer of Example 4 | 200.0 | grams |

| | | |
|---|---|---|
| Tosyl isocyanate | 15.2 | grams |
| Triethylamine | 0.1 | grams |

Procedure: The above materials were stirred together in a lined can under a stream of nitrogen. The can was covered and placed in a 140°F. oven for 16 hours without stirring. IR analysis of the resultant product showed the absence of hydroxyl and isocyanate bands thus indicating that the reaction was complete. The resulting polythioether had a clear amber color with a viscosity of 3000 poise.

Example 8

Synthesis of linear aromatic terminated polythioether

| | | |
|---|---|---|
| Hydroxyl terminated polymer of Example 4 | 200.0 | grams |
| Phenyl isocyanate | 9.2 | grams |
| Triethylamine | 0.1 | grams |

Procedure: The above materials were stirred together in a lined can under a stream of nitrogen. The can was covered and placed in a 140°F. oven for 16 hours without stirring. IR analysis showed the reaction was complete through the disappearance of the hydroxyl and isocyanate bands. The resulting polythioether was a clear amber liquid with a viscosity of 1725 poise.

Example 9

Synthesis of linear aromatic terminated polythioether

| | | |
|---|---|---|
| Hydroxyl terminated polymer of Example 4 | 200.0 | grams |
| Toluene-2, 4-diisocyanate | 13.4 | grams |
| Triethylamine | 0.1 | grams |

Procedure: The above materials were stirred together in a lined can under a stream of nitrogen. The can was covered and placed in a 140°F. oven for 16 hours, without stirring. Isocyanate analysis showed the reaction to be complete.

At this point 7.6 grams n-butanol were added along with an additional 0.1 gram triethylamine catalyst. The materials were again stirred, covered, and placed in a 158°F. oven for 16 hours. At the end of this period an IR spectrum of the material showed no hydroxyl or isocyanate band. This indicated the completion of reaction. The resulting polythioether was a clear amber liquid with a viscosity of 4800 poise.

Example 10

Synthesis of linear thioalkyl terminated polythioether

| | | |
|---|---|---|
| Thiodiglycol | 1287 | grams |
| Hydroxyethyl, 2-hydroxypropyl sulfide | 551 | grams |
| Hydroxyethyl hexyl sulfide | 162 | grams |
| Triphenyl phosphite | 16.5 | grams |
| Thiodiphenol | 4.6 | grams |

Procedure: The above materials were stirred together under nitrogen in a 2 liter glass reactor equipped with a thermometer and a condenser for distillation. The mixture temperature was maintained at 150°C. for 5 hours after which it was raised to 180°C. and full vacuum was applied. The reaction was carried out under these conditions until analysis showed a hydroxyl number lower than 10. The resulting polythioether was a clear light amber liquid with a viscosity of 17 poise.

Example 11

Synthesis of HTN (1-hydroxy, 3-thia, 8-nonene)

To 4210 grams (51.34 moles) of 1,5-hexadiene was added 5.0 grams of t-butyl perbenzoate. This mixture was heated to about 50°C. at which time a solution of 1950 grams (25.0 moles) of 2-mercaptoethanol and 2.5 grams of tetramethyl guanidine was added dropwise with vigorous stirring. The addition took 3 hours. After the addition the mixture was allowed to reflux for 2 hours and then allowed to stand overnight. Unreacted 1,5-hexadiene was recovered by distillation. The resulting product contained approximately 85-90% of 1-hydroxy, 3-thia, 8-nonene, a low melting white solid.

Example 12

Synthesis of linear double bond terminated polythioether

| | | |
|---|---|---|
| Thiodiglycol | 2722 | grams |
| Hydroxyethyl, 2-hydroxy propyl sulfide | 1167 | grams |
| HTN (Example 11) | 483 | grams |
| Triphenyl phosphite | 39 | grams |
| Thiodiphenol | 10 | grams |

Procedure: The above materials were stirred together under nitrogen in a 4 liter glass reactor equipped with a thermometer and a condenser for distillation. The temperature of the stirred mixture was kept at 150°C. for 5 hours after which it was raised to 180°C.. This process was carried out under a stream of nitrogen. The distillate (mainly water) was collected until the vapor temperature of the distillate dropped to about 70°C.. At this point, further condensation was carried out under full vacuum (about 5 millimeters of mercury) at 180°C. to 185°C. until analysis showed a hydroxyl number lower than 10. The resulting olefin terminated liquid polythioether

was a golden yellow color with a viscosity of 65 poise at 77°F..

Example 13

Synthesis of linear vulcanizable mercaptan terminated polythioether

| | | |
|---|---|---|
| Double bond terminated polymer of Example 12 | 100 | grams |
| Dimercapto diethyl sulfide | 10.4 | grams |
| t-butyl perbenzoate | 0.6 | grams |
| Tetramethyl guanidine | 0.1 | grams |

Procedure: The materials were slowly stirred together (no vortex formed) in a lined can. The batch was covered and placed in a 158°F. oven for 16 hours without stirring. Analysis of infrared spectrum of the resulting product showed conversion of all olefinic groups. The final product had a viscosity of 450 poise at 79°F..

Example 14

Vulcanization of linear liquid mercaptan terminated polymer with epoxy resin

| | | |
|---|---|---|
| Mercaptan terminated polymer of Example 13 | 100 | grams |
| Tris-2,4,6-dimethyl amino methyl phenol (catalyst) | 10 | grams |
| Novolac Epoxy resin (DEN-431, Dow Chemical Co.) | 22 | grams |

Procedure: The mercaptan terminated polymer and catalyst were stirred together, then the epoxy resin was added and mixed thoroughly. The material was cured for 24 hours at room temperature to a rubber of 35 Rex hardness with an elongation of 100%.

Example 15

Synthesis of polyurethane prepolymer from linear hydroxyl terminated polythioether

| | | |
|---|---|---|
| Linear hydroxyl terminated polythioether (hydroxyl No. 34.4) made by the procedure of Example 4 | 100 | grams |
| 2,4-toluene diisocyanate | 8.6 | grams |
| 2,6-toluene diisocyanate | 2.1 | grams |
| Tri-ethyl amine | 0.1 | grams |

Procedure: The polythioether was dried under vacuum at 210°F. and 5 millimeters of mercury for 3 hours. The water content was found to be less than 0.05%. The dried polythioether was thoroughly mixed with the diisocyanate and amine under a nitrogen atmosphere and then heated at 120°F. for 18 hours. The resulting prepolymer had an isocyanate content of 2.38% and a viscosity of 740 poise at 77°F..

Example 16

Preparation of accelerators

Accelerator A:

| | | |
|---|---|---|
| Polymethylene dianiline (Curithane 103) | 41.5 | grams |
| Thioalkyl terminated polymer of Example 10 | 58.5 | grams |

Procedure: The above two ingredients were mixed and the resulting mixture heated to approximately 200°F. and stirred until the polymethylene dianiline was dissolved in the thioalkyl terminated polymer to form a table solution.

Accelerator B:

| | | |
|---|---|---|
| Methylene bis-methyl anthranilate (MBMA) | 51.7 | grams |
| Thioalkyl terminated polymer of Example 10 | 48.3 | grams |

Procedure: The above two ingredients were mixed and the resulting mixture heated to a temperature of approximately 200°F. and stirred until the MBMA is dissolved in the thioalkyl terminated polymer to form a stable solution.

Example 17

Preparation of elastomeric sealant

| | | |
|---|---|---|
| Polyurethane prepolymer of Example 15 | 100 | grams |
| Accelerator A of Example 16 | 12.5 | grams |
| Dibutyl tin diacetate | 0.5 | grams |

Procedure: The above ingredients were mixed together and within 5 minutes the resulting mixture gelled. After two days at room temperature the mixture cured to a rubber of hardness 46 Rex.

Example 18

Preparation of elastomeric sealant

| | | |
|---|---|---|
| Polyurethane prepolymer of Example 15 | 100 | grams |
| Accelerator B of Example 16 | 15.1 | grams |
| Dibutyl tin diacetate | 0.5 | grams |

Procedure: The above ingredients were mixed together and within 3 hours the resulting mixture gelled. After two days at room temperature the mixture cured to a rubber of hardness 44 Rex.

CLAIMS

1. A non-crystallizing water, solvent, fuel and temperature resistant linear, liquid polythioether containing no carbonyl groups and having the formula

$$B\{O-\underset{R_1}{CH}-\underset{R_2}{CH}-S-(XS)_p-\underset{R_3}{CH}-\underset{R_4}{CH}\}_n O-B$$

wherein each of $R_1$, $R_2$, $R_3$ and $R_4$ is hydrogen or lower alkyl with the provision that a sufficient number of $R_1$, $R_2$, $R_3$ and/or $R_4$ are lower alkyl in said polymeric backbone to render said backbone non-crystallizing; X is a divalent organic radical selected from $-CH_2-CH_2-$, $-CH_2-CH_2-CH_2-CH_2-$, $-CH_2-CH_2-S-CH_2-CH_2-$, or $-CH_2-CH_2-O-CH_2-CH_2-$; n is 15 to 200, p is 0 or 1 and B is a terminating radical which does not substantially reduce the water, solvent and fuel resistance, said terminating radical being selected from the group consisting of a chemically non-reactive radical and a vulcanizable radical curable to an elastomeric sealant.

2. A liquid polythioether according to Claim 1 wherein the total number of $R_1$, $R_2$, $R_3$ and/or $R_4$ which are lower alkyl in said polymeric backbone is at least the nearest whole number to the quotient of n/5.

3. A liquid polythioether according to Claim 1 wherein the total number of $R_1$, $R_2$, $R_3$ and/or $R_4$ which are lower alkyl in said polymeric backbone is at least the nearest whole number to the quotient of n/4.

4. A liquid polythioether according to Claim 1 wherein at least one of $R_1$ or $R_4$ is lower alkyl and each of $R_2$ and $R_3$ is hydrogen.

5. A liquid polythioether according to Claims 2, 3 or 4 wherein lower alkyl is methyl.

6. A liquid polythioether according to any of Claims 1 to 5 wherein p is 0.

7. A liquid polythioether according to any of Claims 1 to 6 wherein said terminating radical does not exceed twenty carbon atoms, preferably ten carbon atoms.

8. A liquid polythioether according to any of Claims 1 to 7 wherein said terminating radical is chemically non-reactive.

9. A liquid polythioether according to Claim 8 wherein said chemically non-reactive radical is aromatic; alkyl; heteroalkyl, such as thioalkyl or oxyalkyl; alicyclic, preferably thioalicyclic or oxyalicyclic; or heteroalicyclic.

10. A liquid polythioether according to any of Claims 1 to 8 wherein said terminating radical is a vulcanizable radical.

11. A liquid polythioether according to Claim 10 wherein said vulcanizable radical is epoxy; reactive silyl; isocyanate; reactive olefinic double bond; mercaptan or hydrogen of a hydroxyl group.

12. A solid vulcanized elastomer sealant produced from a liquid polythioether as claimed in any of Claims 1 to 11.

0055531

European Patent Office

Application number

# EUROPEAN SEARCH REPORT

EP 81 30 5753.6

## DOCUMENTS CONSIDERED TO BE RELEVANT

| Category | Citation of document with indication, where appropriate, of relevant passages | Relevant to claim |
|---|---|---|
| X | US - A - 2 900 368 (F.B. STILMAR)<br>* example 13 *<br>-- | 1,11,<br>12 |
| A | DE - B - 1 720 678 (BAYER AG)<br>* column 5, line 62 *<br>-- | 1,9 |
| D,A | US - A - 3 335 189 (E. DEGENER et al.)<br>* example *<br>-- | 1 |
| D,A | US - A - 3 312 743 (H.G. SCHMELZER et al.)<br>* examples 1 to 3 *<br>-- | 1 |
| A | DE - B - 1 026 072 (BAYER AG)<br>* claims *<br>---- | 1 |

CLASSIFICATION OF THE APPLICATION (Int. Cl. 3)

C 08 G 75/12
C 08 G 18/52
C 08 G 59/66

TECHNICAL FIELDS SEARCHED (Int.Cl. 3)

C 08 G 18/50
C 08 G 18/52
C 08 G 59/66
C 08 G 75/04
C 08 G 75/12

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

X The present search report has been drawn up for all claims

| Place of search | Date of completion of the search | Examiner |
|---|---|---|
| Berlin | 26-03-1982 | WIBMER |

EPO Form 1503.1 06.78